# EUROPÄISCHE PATENTANMELDUNG

(11) **EP 0 794 326 A1**
(43) Veröffentlichungstag der Anmeldung: **10.09.1997**
(21) Anmeldenummer: 97101938.5
(22) Anmeldetag: 07.02.1997
(51) Int. Cl.: F01P 3/20, B60T 1/087, B60T 10/02

(54) **Antriebseinheit mit einem Motor und einem Retarder**

(30) Priorität: 08.03.1996 DE 19609150; 12.09.1996 DE 19637316
(71) Anmelder: Voith Turbo GmbH & Co. KG, 89522 Heidenheim (DE)
(72) Erfinder: Friedrich, Jürgen, 74564 Crailsheim (DE); Heilinger, Peter, 74564 Crailsheim (DE); Vogelsang, Klaus, 74564 Crailsheim (DE)
(74) Vertreter: Weitzel, Wolfgang, Dr.-Ing. Patentanwalt

(57) **Zusammenfassung**

Die Erfindung betrifft eine Antriebseinheit mit den folgenden Merkmalen:
ein Motor (4.0) und ein Getriebe;
ein hydrodynamischer Retarder (3.0);
eine Pumpe (1.0);
ein Ventil (2.0), das der Pumpe (1.0) in Strömungsrichtung nachgeordnet ist, und mit dessen Hilfe das Arbeitsmedium wahlweise im reinen Kühlkreislauf oder im kombinierten Kühl- und Bremskreislauf geführt wird.

## Beschreibung

Die Erfindung betrifft eine Antriebseinheit mit einem Motor, einem Retarder und einer Pumpe. Eine solche Antriebseinheit ist aus DE 37 13 580 C1 bekannt geworden (Dokument 1).

Bei dieser bekannten Antriebseinheit dient der Retarder dazu, im Kühlmittelkreislauf das Kühlmittel der Fahrzeug-Kühlanlage sowohl im normalen Traktionsbetrieb als auch im Dauerbremsbetrieb umzuwälzen ("Wasserpumpen-Retarder"). Dabei wird dieser Retarder durch eine geeignete Ventilanordnung derart gesteuert, daß er im Bedarfsfalle auch Bremsarbeit leisten kann. Bei der Funktion "Pumpen" soll die Leistungsaufnahme möglichst gering sein, während sie bei der Funktion "Bremsen" möglichst hoch sein soll. Die technischen Anforderungen sind somit sehr gegensätzlich. Dies führt dazu, daß die Funktion "Pumpen" nicht effektiv genug arbeitet, weil nämlich hierbei zu viel Leistung aufgenommen wird.

Trennt man hingegen die beiden Funktionen baulich, indem man außer dem Retarder eine separate Pumpe vorsieht, so lassen sich zwar Retarder und Pumpe derart auslegen, daß die Funktionen optimal erfüllt werden. Jedoch hat ein solches System einen hohen Raumbedarf. Dies ist nachteilig, da der Raum in Fahrzeugen gerade an der betreffenden Stelle sehr beengt ist.

Der Vollständigkeit halber sollen noch die folgenden Dokumente erwähnt werden:

Der aus der US-PS 3 720 372 (Dokument 2) bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE-PS 33 01 560 (Dokument 3) ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 1 946 167 (US-PS 3 650 358) bekannter Retarder ist direkt mit der Kurbelwelle einer Verbrennungskraftmaschine verbunden, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist.

EP 95113594 beschreibt eine Antriebseinheit mit einem Motor und einem hydrodynamischen Retarder. Dabei ist zum Fördern des Kühlmittels ein Pumpenlaufrad vorgesehen, das axial zum Rotorschaufelrad des Retarders angeordnet ist.

Der Erfindung liegt die Aufgabe zugrunde, eine Antriebseinheit der eingangs beschriebenen Art derart zu gestalten, daß bei allen Betriebszuständen ein optimales Betreiben dieser Antriebsanlage möglich ist. Insbesondere sollen die Verlustleistungen reduziert werden.
diese Aufgabe wird durch die Merkmale von Anspruch 1 gelöst.

Die Erfinder haben in geschickter Weise aus den bekannten Bauteilen unter Verwendung eines Ventiles zwei Kreisläufe hergestellt, die mit Hilfe des genannten Ventiles wahlweise mit Arbeitsmedium beschickt werden können. Die beiden Kreisläufe lassen sich stets in optimaler Weise betreiben, sowohl im Bremsbetrieb, als auch im Nicht-Brems-Betrieb. Die Strömungwiderstände lassen sich derart gestalten, daß die Durchsätze in den beiden Kreisläufen weitgehend einander angepaßt werden. Der Durchsatz durch den einen Kreislauf ist daher im wesentlichen gleich jenem des anderen Kreislaufes. Dabei werden gerade solche Abweichungen der Durchsätze der beiden Kreisläufe zugelassen, wie dies im Hinblick auf eine optimale Kühlung sowie im Hinblick auf die Festigkeit der Bauteile noch akzeptabel ist.

Durch die Erfindung ist gewährleistet, daß das Arbeitsmedium beim Nicht-Brems-Betrieb weitgehend verlustarm umläuft.

Durch Umschalten vom Pumpbetrieb auf Bremsbetrieb wird das hydrodynamische Energiepotential der Pumpe zum Aktivieren des Retarders ohne Veränderung der hydrodynamischen Verhältnisse der Pumpe genutzt.

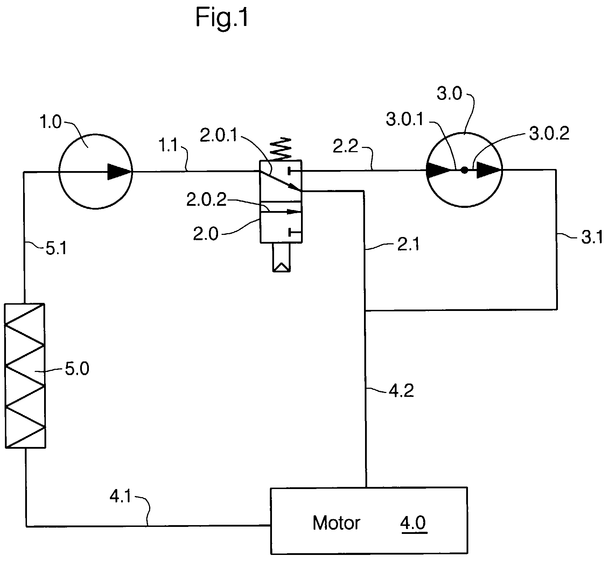

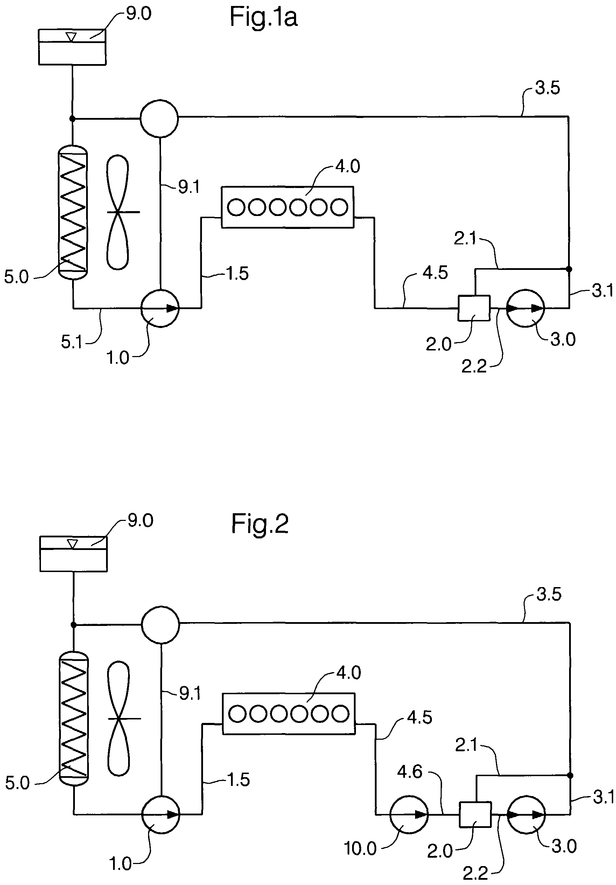

Die Erfindung ist anhand der Zeichnungen näher erläutert. Es zeigen
- Fig.1:: eine erste Ausführungsform der Erfindung umfassend eine Pumpe im Kühlkreislauf mit einem Primärretarder
- Fig.1/A: eine Ausführungsform gemäß Fig.1 mit einem Sekundärretarder.
- Fig.2: eine zweite Ausführungsform der Erfindung stellvertretend für eine Ausführungsformen mit mehr als einer Pumpe im Kühlkreislauf.
In Fig. 1 ist schematisch eine Antriebseinheit dargestellt, die wie folgt aufgebaut ist:

Ein Kühlkreislauf weist eine Pumpe 1.0 auf. Der Pumpe ist - in Fließrichtung des Arbeitsmediums - ein Ventil 2.0 nachgeschaltet, hier als 3/2-Wege-Ventil ausgeführt. Die Einheit umfaßt ferner einen hydrodynamischen Retarder 3.0, einen Motor 4.0 sowie einen Kühler 5.0. Der hydrodynamische Retarder ist in vorliegendem Ausführungsbeispiel, ohne daß hierin eine BEschränkung zu sehen ist, ein Primärretarder.

Die einzelnen Aggregate sind durch die folgenden Leitungen miteinander verbunden:

Eine Leitung 1.1 verbindet die Pumpe 1.0 mit dem Ventil 2.0. Eine Leitung 2.1 sowie eine Leitung 4.2 stellen eine Verbindung zwischen Ventil 2.0 und Motor 4.0 her. Eine weitere Leitung 2.2 verbindet das Ventil 2.0 mit dem Retarder 3.0.

Eine Leitung 3.1 sowie die Leitung 4.2 verbinden Retarder 3.0 mit dem Motor 4.0. Eine Leitung 4.1 verbindet den Motor 4.0 mit dem Kühler 5.0. Kühler 5.0 ist mittels einer Leitung 5.1 mit der Pumpe 1.0 verbunden.

Durch das Ventil 2.0 ist es möglich, das Arbeitsmedium wahlweise einen von zwei Kreisläufen durchströmen zu lassen.

Der erste Kreislauf - im folgenden "Kühlkreislauf genannt - ist gebildet aus den folgenden Elementen: Pumpe 1.0, Ventil 2.0, Motor 4.0, Kühler 5.0 sowie die zwischen diesen Aggregaten befindlichen Leitungsabschnitten. Dieser Kreislauf wird beim Nicht-Brems-Betrieb benutzt. Dabei dient das Arbeitsmedium einzig und allein als Kühlmedium.

Der zweite Kreislauf - im folgenden "kombinierter Kühl- und Bremskreislauf" genannt - ist aus den folgenden Aggregaten gebildet: Pumpe 1.0, Ventil 2.0, Retarder 3.0, Motor 4.0, Kühler 5.0 sowie aus den zugehörenden Leitungsabschnitten.
Dieser Kreislauf wird beim Bremsbetrieb benutzt. Das Arbeitsmedium führt dabei die beiden Funktionen des Bremsens und des Kühlens aus.

Die genannten Aggregate mit den zugehörenden Leitungsabschnitten bilden Strömungswiderstände. Die Differenz der Summe dieser Strömungswiderstände des einen und des anderen Kreislaufes soll eine geringe sein. Sie soll derart bemessen werden, wie dies im Hinblick auf die bestmögliche Kühlung sowie im Hinblick auf die Festigkeit der einzelnen Bauteile optimal ist.

Die Differenz der kummulierten Widerstände der beiden Kreisläufe läßt sich beispielsweise wie folgt minimieren:

Es können konstruktive Maßnahmen in Ventil 2.0 getroffen werden oder innerhalb des Ventils 2.0 in dessen Leitung 2.0.2.

Auch können die Leitungen 2.2 und 3.0.1 zur Beeinflussung des Widerstandes herangezogen werden, beispielsweise durch Einbau entsprechender Drosseln.

Kombinationen sind ebenfalls möglich. Ferner sind Maßnahmen denkbar, durch die Ventil 2.0 umgangen werden kann, beispielsweise mittels einer geschalteten Bypassleitung von Pumpe 1.0 zu Leitung 3.0.1 im Retarder.

In Fig. 1a ist eine Ausführungsform mit einer im Kühlkreislauf angeordneten Pumpe 1.0 sowie einem Retarder 3.0, der als Sekundärretarder ausgebildet ist, dargestellt. Gleiche Bauteile wie in Fig.1 sind in Fig. 1A mit gleichen Bezugsziffern bezeichnet.

Allerdings ist Pumpe 1.0 nicht direkt mit dem Umschaltventil 2.0 verbunden sondern über Leitung 1.5 mit Motor 4.0.

Das Kühlmedium wird nachdem es Rotor 4.0 durchströmt und die Wärme aufgenommen hat über Leitung 4.5 zum Umschaltventil 2.0 geführt. In einer Stellung des Umschaltventils wird das Kühlmedium, das gleichzeitig Arbeitsmedium des Retarders ist, durch den Retarder geführt in der anderen Stellung am Retarder 3.0 vorbei.

Somit wird gemäß Fig. 1A der Kühlkreislauf gebildet aus: Pumpe 1.0, Motor 4.0, Ventil 2.0, und Kühler 5.0 sowie den zwischen diesen Aggregaten befindlichen Leitungsabschnitten.

Die Wasserpumpe 1.0 wird in vorliegender Ausführungsform motordrehzahlabhängig betrieben.

Der Ausgleichsbehälter 9.0 sorgt über Leitung 9.1 dafür, daß an der Pumpensaugseite immer derselbe Druck anliegt.

Der kombinierte Kühl- und Bremskreisauf wird gebildet aus folgenden Aggregaten: Pumpe 1.0, Motor 4.0, Ventil 2.0, Retarder 3.0 sowie Kühler 5.0.

Der Retarder ist in vorliegendem Ausführungsbeispiel ein getriebeabtriebseitig angeordneter Sekundärretarder, der in Abhängigkeit von der Geschwindigkeit des Fahrzeugs angetrieben wird.

Nachfolgend wird stellvertretend für eine Ausführungsform, die mehrere Pumpen im Kühlkreislauf umfasst, eine Variante mit zwei Pumpen in Fig. 2 dargestellt. Gleiche Aggregate sind mit gleichen Bezugszeichen wie in Fig. 1 bzw. 1A versehen. Neben der Pumpe 1.0 zwischen Kühler 5.0 und Motor 4.0 ist in den Kühlkreislauf dem Retarder 3.0 strömungsmäßig vorangeordnet eine weitere Pumpe 10.0. Zwischen Pumpe 10.0 und Retarder befindet sich ein weiterer Leistungsabschnitt 4.6. Der Retarder ist gemäß vorliegendem Beipiel eine Sekundärretarder, ohne daß hierin eine Beschränkung zu sehen ist.

Das Umschaltventil ist in Ströungsrichtung im kombinierten Kühl-/Bremskreislauf der Ausführungsform gemäß Fig. 2 bestehend aus Pumpe 1.0, Motor 4.0, Pumpe 10.0, Ventil 2.0, Retarder 4.0 dem Retarder vorgeordnet.

Durch die Verwendung von zwei Pumpen 1.0, 10.0 wird folgendes Vorteil erzielt:

Die Pumpe 1.0, deren Drehzahl mit der Drehzahl des Motors gekoppelt ist, kann um die Leistung der Pumpe 10.0 verkleinert werden. Die weitere Pumpe 10.0 kann dann bspw. als getriebeabtriebseitige Pumpe ausgeführt werden, d.h. ihre Förderleisung ist fahrgeschwindigkeitsabhängig. Dadurch wird erreicht, daß immer nur dann, wenn die Pumpleistung von Pumpe 10.0 wirklich benötigt wird, nämlich bei hohen Fahrgeschwindigkeiten oder im Retarderbetrieb die Pumpleistung zur Verfügung gestellt wird. Die ständig mit Motordrehzahl laufende Wasserpumpe 1.0 kann kleiner dimensioniert und damit kostengünstiger produziert werden.

In der dargestellten besonderen Ausführungsform ist das Ventil 2.0 in Strömungsrichtung unmittelbar vor dem Retarder 3.0 angeordnet.

Denkbar ist aber auch, daß die Pumpe 10.0 hinter dem Ventil 2.0 und vor dem Retarder angeordnet ist.

Selbstverständlich können in analoger Weise wie oben dargestellt auch mehr als zwei Pumpen in den Kühl- und/oder kombinierten Kühl-/Bremskreislauf eingebracht werden.

## Patentansprüche

1. Antriebseinheit mit den folgenden Merkmalen:
1.1 ein Motor und ein Getriebe;
1.2 ein hydrodynamischer Retarder;
1.3 eine Pumpe;
1.4 ein Ventil, das der Pumpe in Strömungsrichtung nachgeordnet ist, und mit dessen Hilfe das Arbeitsmedium wahlweise im reinen Kühlkreislauf oder im kombinierten Kühl- und Bremskreislauf geführt wird.

2. Antriebseinheit nach Anspruch 1, dadurch gekennzeichnet, daß Vorkehrungen getroffen sind, um die Differenz der Durchsätze zwischen den beiden Kreisläufen im Hinblick auf eine optimale Kühlung sowie auf die Festigkeit der Bauteile minimiert werden.

3. Antriebseinheit nach Anspruch 1 oder 2, dadurch gekennzeichnet, daß das Ventil ganz oder teilweise in eine der Antriebskomponenten (Motor, Retarder, Pumpe) integriert ist.

4. Antriebseinheit nach einem der Ansprüche 1 bis 3, dadurch gekennzeichnet, daß der Retarder an einer Antriebskomponente (Motor, Getriebe, Kupplung, Rad oder dergleichen) angeordnet oder in diese integriert ist.

5. Antriebseinheit nach einem der Ansprüche 1 bis 4, dadurch gekennzeichnet, daß Pumpe und Retarder zu einem einzigen Bauteil integriert sind.

6. Antriebseinheit nach einem der Ansprüche 1-5, dadurch gekennzeichnet, daß Pumpe und Retarder als einziges Bauteil an einer Antriebskomponente (Motor, Getriebe, Kupplung, Rad o. dgl.) angeordnet oder in diese integriert sind.

7. Antriebseinheit nach einem der Ansprüche 1 bis 6, dadurch gekennzeichnet, daß das Ventil als 3/2-Wegeventil oder als zwei separate Ventile ausgeführt ist.

8. Antriebseinheit nach einem der Ansprüche 1 - 7,
dadurch gekennzeichnet, daß mindestens
eine weitere Pumpe im Kühlkreislauf und/oder im kombinierten Kühl- und Bremskreislauf angeordnet ist.

9. Antriebseinheit nach einem der Ansprüche 1 - 8,
dadurch gekennzeichnet, daß
das Ventil dem Retarder in Strömungsrichtung vorgeordnet ist.

10. Antriebseinheit nach Anspruch 9,
dadurch gekennzeichnet, daß
das Ventil dem Retarder in Strömungsrichtung unmittelbar vorgeordnet ist.

11. Antriebseinheit gemäß einem der Ansprüche 1 - 10,
dadurch gekennzeichnet, daß
der Retarder ein Primärretarder ist.

12. Antriebseinheit gemäß einem der Ansprüche 1 - 10,
dadurch gekennzeichnet, daß
der Retarder ein Sekundärretarder ist.
